Europäisches Patentamt

European Patent Office

Office européen des brevets

(19)

(11) Veröffentlichungsnummer : **0 146 030**
B1

(12) **EUROPÄISCHE PATENTSCHRIFT**

(45) Veröffentlichungstag der Patentschrift :
07.09.88

(21) Anmeldenummer : 84114351.4

(22) Anmeldetag : 27.11.84

(51) Int. Cl.⁴ : **B 23 B 27/16,** B 23 B 29/034,
B 23 B 51/04, B 23 B 51/10,
B 23 C 5/24

(54) Schneidwerkzeug zur spanabhebenden Metallbearbeitung.

(30) Priorität : 01.12.83 DE 3343448

(43) Veröffentlichungstag der Anmeldung :
26.06.85 Patentblatt 85/26

(45) Bekanntmachung des Hinweises auf die Patenterteilung : 07.09.88 Patentblatt 88/36

(84) Benannte Vertragsstaaten :
AT BE CH DE FR GB IT LI NL SE

(56) Entgegenhaltungen :
DE-A- 2 536 487
DE-A- 3 037 576
GB-A- 2 092 486
US-A- 3 188 717
US-A- 3 889 331

(73) Patentinhaber : Hochmuth + Hollfelder
Isarstrasse 12
D-8500 Nürnberg 60 (DE)

(72) Erfinder : Hochmuth, Walter
Brandenburger Strasse 95
D-8500 Nürnberg (DE)
Erfinder : Hollfelder, Hans-Peter
Lindenstrasse 51
D-8510 Fürth (DE)

(74) Vertreter : Patentanwälte Czowalla . Matschkur +
Partner
Dr.-Kurt-Schumacher-Strasse 23 Postfach 9109
D-8500 Nürnberg 11 (DE)

## Beschreibung

Die Erfindung bezieht sich auf ein Schneidwerkzeug zur spanabhebenden Metallbearbeitung mit einem in eine Ausnehmung eines Werkzeugschaftes einsetzbaren und durch eine Klemmpratze darin festgelegten Schneidkörper in Form etwa eines Prismas mit zwei einander diagonal gegenüberliegenden Schneidkanten und benachbarte Seitenflächen bildenden Spanflächen, die mit der jeweils gegenüberliegenden Hauptschnittdruck-Abstüzfläche einen sich zur Vorschubdruck-Abstützfläche öffnenden spitzen Winkel bilden.

Ein derartiges, aus der DE-A-30 37 576 bekanntgewordenes Schneidwerkzeug hat den Vorteil, daß der Schneidkörper einfach hergestellt werden kann, daß man mit sehr geringem Schneidkörpervolumen auskommt und daß darüber hinaus eine Verspannung des Schneidkörpers erfolgen kann, bei der der Spanablauf gegenüber den bisherigen Spansystemen bei wendbaren Schneidkörpern verbessert ist. Insbesondere vermeidet der Schneidkörper dieses Schneidwerkzeugs das Vorsehen komplizierter schrägliegender Eingriffsausnehmungen für die Spannpratze, wie sie beispielsweise bei der DE-A-25 09 226 vorhanden sind.

Für eine Reihe von Anwendungsfällen, insbesondere bei Senk-Werkzeugen, bei welchen meist die gesamte Schneide im Zerspanungs-Eingriff ist, wird es notwendig, daß keine aufbauenden Elemente, wie z. B. eine Spannpratze und wie dies bei der DE-A-30 37 576 gegeben ist, vorhanden ist, da diese den freien Spanablauf verhindert. Der vorliegenden Erfindung liegt daher die Aufgabe zugrunde, ein derartiges, eingangs beschriebenes Werkzeug so auszugestalten, daß es unter Beibehaltung der Vorteile einen noch weiter verbesserten Spanablauf gewährleistet.

Zur Lösung dieser Aufgabe ist gemäß der vorliegenden Erfindung vorgesehen, daß im Bereich der gemeinsamen Längskante der Spanflächen eine durchgehende Längs-Nut in den Schneideinsatz eingearbeitet ist, deren eine Seitenwand als Anlagefläche für die hinterschnittene Vorschub-Druckabstützfläche der Ausnehmung des Werkzeugschaftes dient, während die jeweils andere Seitenwand die Auflagefläche für eine versenkt in eine Quernut des Werkzeugschaftes angeordnete Klemmpratze bildet.

Erfindungsgemäß wird also zwar wiederum eine Nut in den Schneidkörper eingearbeitet, um eine versenkte Anordnung der Klemmpratze zu erhalten. Diese Nut ist jedoch sehr viel einfacher ausgebildet als bei den vorbekannten Anordnungen. Es handelt sich dabei um eine einfache durchgehende, beispielsweise rechtwinklige Nut, wobei, wegen der Wendbarkeit, bevorzugt diese Nut symmetrisch zur entsprechenden Schneidkörperdiagonalen angeordnet ist.

Der entscheidende Unterschied zu den bekannten wendbaren Schneideinsätzen mit einer Eingriffsnut für die Klemmpratze, wobei in beiden Arbeitsstellungen des Schneideinsatzes die gleiche Eingriffsnut in Funktion tritt und lediglich abwechselnd die andere der beiden Seitenflächen von der Klemmpratze beaufschlagt wird, besteht darin, daß der Schneidkörper nicht im Spanflächenbereich anliegt. Stattdessen ist die Vorschubdruck-Abstützfläche des Werkzeugschaftes beim erfindungsgemäßen Schneidwerkzeug hinterschnitten ausgebildet, so daß ein oberer rippenförmig vorspringender Abschnitt an der für die Auflage der Spannpratze nicht benötigten Seitenwand der Nut des Schneidkörpers anliegt. Dies hat unter anderem den Vorteil, daß unabhängig von der Größe und Ausbildung der Spanleitstufe, immer eine gleichgroße Rückdruckfläche zur Mitaufnahme des Schnittdruckes vorhanden ist.

In Weiterbildung der Erfindung kann dabei vorgesehen sein, daß die Klemmpratze die Quernut im wesentlichen vollständig aufüllt. Auch kann dabei vorgesehen sein, daß besonders bei längeren Schneidkörpern, mehrere Klemmpratzen angeordnet sind.

Ein besonderer Vorteil der erfindungsgemäßen durchgehenden- und im Gegensatz zu bekannten wendbaren Schneidkörpern bezüglich der Längsachse des Schneidkörpers nicht geneigten - Nut besteht in der Möglichkeit, den Schneidkörper in jeder beliebgigen Längsstellung in der Ausnehmung des Werkzeugschaftes zu verspannen. Damit können mit Hilfe ein- und der gleichen Schneidplatte beliebige Feinabstufungen hinsichtlich der Schnitt-Tiefe (bei Senkwerzeugen) erzielt werden und man vermeidet die Notwendigkeit für bestimmte Bearbeitungsmaße jeweils genau angepaßte Schneidkörper fertigen zu müssen. Um dabei durch den Schnittdruck ein gleitendes Verstellen der Lage des Schneidkörpers zu verhindern, soll die Rückdruck-Abstützfläche des Schneidkörpers an einem Verstellelement anliegen. Man stellt also den Schneidkörper in der Ausnehmung des Werkzeugschaftes durch Verschieben auf die gewünschte Position ein und spannt ihn dann mit der Spannpratze fest.

Darüber hinaus ermöglicht es der führungsähnlich gestaltete Plattensitz auch, den Schneidkörper in die kleinstmögliche Position zu bringen, zu spannen und über das als Abdrückelement ausbildbare Verstellelement in die gewünschte Position zu schieben. Ein Nachspannen der Spannpratze ist nicht erforderlich. Beim Verschieben der Schneidplatte bleibt die Hauptschneide in ihrer Position. Um dies in jedem Fall zu gewährleisten ist es erforderlich, daß der Druckpunkt des Verstellelements, welches bevorzugt als kleingängige Verstellschraube ausgebildet ist, vor dem Angriffspunkt des Spannelementes liegt.

Weiter oben wurde bereits beschrieben, daß speziell für Senkwerkzeuge, bevorzugt die Spann- bzw. Anlagenut symmetrisch angeordnet ist. Nun gibt es beim Ausdrehen von relativ tiefen Bohrungen den Anwenderwunsch, um ein Verlaufen des Ausbohrwerkzeuges zu vermeiden, daß ein zweischneidiges oder mehrschneidiges Werkzeug eingesetzt wird, bei welchem die Schrupp-Platte(n) axial gesehen verlaufen, jedoch radial gegenüber der nachfolgenden Schlichtplatte(n) kleiner schneiden. Die nachfolgende Schlichtplatte(n) machen den Bohrungsdurchmesser fertig. Im Regelfall genügen axiale und radiale Verschiebungen von 0,3 bis 0,5 mm zwischen den Wendeplatten. Diese Ausführungsart kann bei dieser Erfindung durch das Anbringen von verschieden großen, symmetrischen Spannuten jedoch auch durch das Einbringen von asymmetrischen Spannuten erzielt werden, ohne daß an Trägerwerkzeug eine Veränderung gemacht werden muß.

Weitere Vorteile, Merkmale und Einzelheiten der Erfindung ergeben sich aus der nachfolgenden Beschreibung einiger Ausführungsbeispiele, sowie anhand der Zeichnung. Dabei zeigen :

Fig. 1 einen Querschnitt durch ein erfindungsgemäßes Schneidwerkzeug längs der Linie I-I in fig. 2,

Fig. 2 eine Draufsicht auf das Schneidwerkzeug,

Fig. 3 eine Draufsicht auf den Schneidkörper.

Fig. 4 einen im wesentlichen der Fig. 1 entsprechenden Schnitt durch den Werkzeugschaft ohne Schneidkörper und Spannelement,

Fig. 5 und 6 Seitenansichten eines Drei-Schneiden-Senkers in um 90° gegeneinander versetzten Blickrichtungen,

Fig. 7 eine Stirnansicht des Senkers nach den Fig. 5 und 6 mit drei erfindungsgemäß gehalterten Schneideinsätzen,

Fig. 8 einen erfindungsgemäß ausgebildeten Kurzloch-Vollbohrer in Seitenansicht sowie einer teilweise aufgebrochenen Stirnansicht,

Fig. 9 eine abgewandelte Ausführungsform eines Kurzoch-Vollbohrers gemäß Fig. 8 mit rechtwinkligen Bearbeitungsenden,

Fig. 10 den Aufbau eines « klassischen » Kurzloch-Vollbohrers,

Fig. 11 ein Schrupp-Schlichtwerkzeug mit asymmetrischer Spannutgestaltung,

Fig. 12 ein rechtsschneidendes Senkwerkzeug mit auswechselbarem Spiralbohrer,

Fig. 13 einen Messerkopf mit axial einstellbaren Schneiden,

Fig. 14 einen Fräser,

Fig. 15 einen Keilnutenfräser,

Fig. 16 eine Kleinbohrstange,

Fig. 17 einen dreischneidigen Senker,

Fig. 18 einen weiteren dreischneidigen Senker mit Zugankerverstellung und

Fig. 19 einen Zirkular-Stechfräser.

Im Werkzeugschaft 1 ist eine dreiseitig offene Ausnehmung 2 zur Aufnahme des Schneideinsatzes 3 eingearbeitet, wobei der Schneideinsatz 3 in seiner Grundform im wesentlichen dem Schneideinsatz der bereits eingangs angesprochenen DE-A-30 37 576 entspricht. Die Vorschubdruck-Abstützfläche 4 ist hinterschnitten ausgebildet, so daß eine vorspringende Rippe 5 entsteht, welche der Seitenwand 6 einer durchgehenden Längsnut 7 des Schneidkörpers 3 anliegt, während die zweite Seitenfläche 8 der Längsnut 7 des Schneidkörpers 3 von einer Klemmpratze 9 beaufschlagt wird. Es dient also nicht wie üblicherweise der hinter der Spanformungsnut 10 übrigbleibende Rest der Spanflächen 11 bzw. 12 als Anlagefläche für die Vorschubdruck-Abstützfläche 4, sondern die jeweils nicht von der Klemmpratze 9 beaufschlagte Seitenfläche der Längsnut 7. Dadurch können sehr große Spanformungsnuten 10 in die Spanflächen 11 und 12 eingearbeitet werden.

Im Werkzeugschaft ist von seiner Oberfläche 13 aus eine Quernut 14 zur Aufnahme der Klemmpratze 9 eingearbeitet, wobei diese in die Ausnehmung 2 zur Aufnahme des Schneideinsatzes 3 ausmündende Quernut 14 von der Klemmpratze 9 im wesentlichen vollständig ausgefüllt wird. Zur Verspannung der Klemmpratze 9 dient ein Gewindebolzen 15 oder eine Spannschraube, dessen oberer Gewindeabschnitt 16 in eine Gewindebohrung 17 der Klemmpratze 9 eingreift, während der untere Gewindeabschnitt 16a mit gegenläufigem Gewindesinn in eine Gewindebohrung 18 des Werkzeugschaftes 1 eingeschraubt wird. Beim Verdrehen des Gewindebolzens 15 ergibt sich somit eine gegenüber dem Ganghub verdoppelter Hub der Verstellung der Klemmpratz 9.

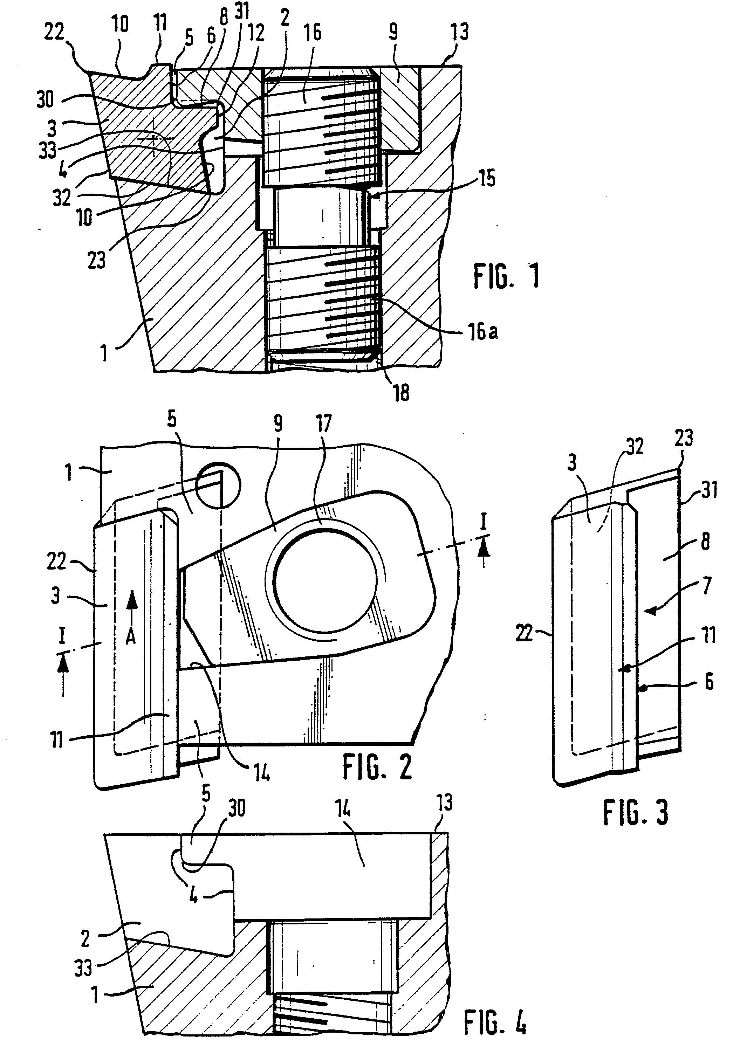

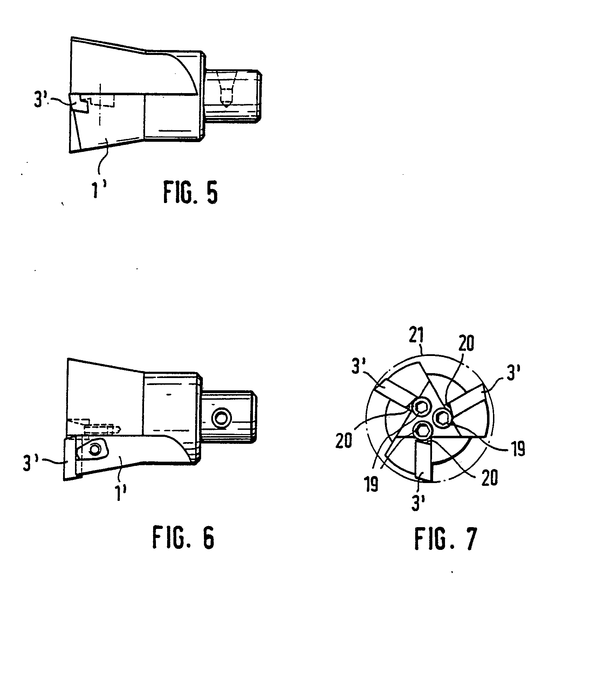

Die erfindungsgemäße Ausbildung eines Schneidwerkzeugs gemäß den Fig. 1 bis 4, bei der die jeweils in Arbeitsstellung befindliche Spanfläche (im dargestellten Ausführungsbeispiel 11) des Schneidkörpers 3, die Oberfläche der Klemmpratze 9 und die Oberfläche 13 des Werkzeugschaftes im wesentlichen in einer Ebene liegen und bei der darüber hinaus der Schneidkörper in der Ausnehmung 2 längsverstellbar angeordnet sein kann, eignet sich besonders für Senker-Werkzeuge, was anhand eines Drei-Schneiden-Senkers der Fig. 5 bis 7 dargestellt ist. Um jeweils 120° verteilt sind an dem nach Art eines Bohrkopfes ausgebildeten Werkzeugkopf 1' drei Schneideinsätze in der Art befestigt, wie es für einen Schneideinsatz anhand der Fig. 1 bis 4 im einzelnen angedeutet ist. Wesentlich ist dabei, daß zusätzlich jedem Schneideinsatz 3' eine Verstellschraube 19 zugeordnet ist, welche jeweils an der Rückdruckabstützfläche 20 anliegt. Durch dieses Verstellelement kann der strichpunktiert eingezeichnete Schnittkreis 21 stufenlos eingestellt werden. Dies ermöglicht wiederum auch größere Toleranzen bei der Fertigung der Schneideinsätze 3 selbst.

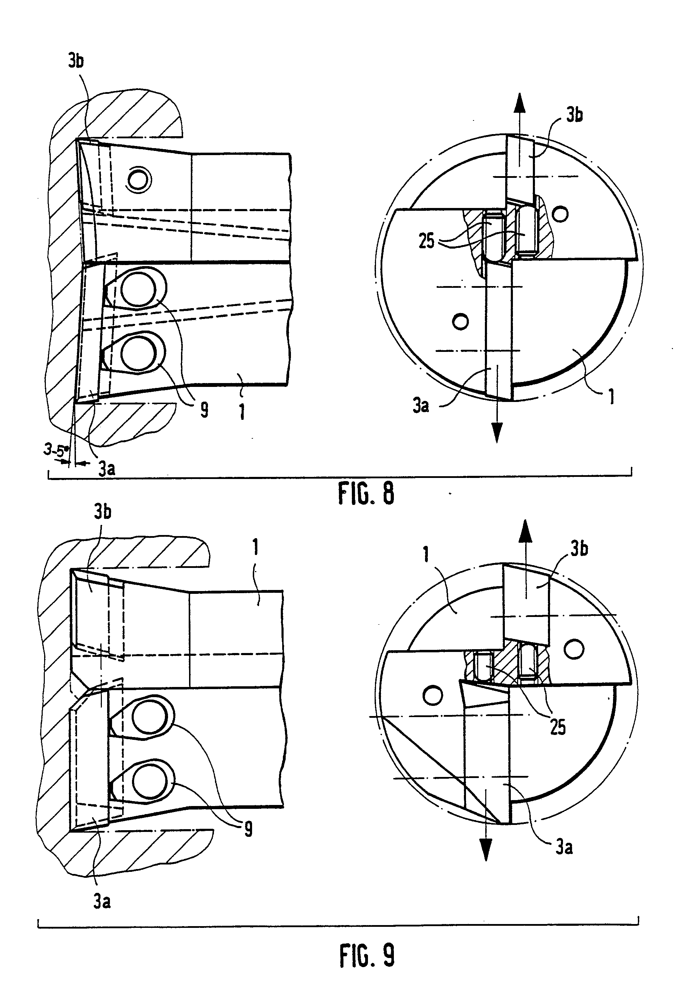

Die Fig. 8 zeigt einen Kurzloch-Vollbohrer. Die Schneide des einen Schneidelements 3a liegt über Mitte, während die zweite Schneide, die des Schneidelements 3b, vor der Bohrungsmitte endet. Die voreilenden Schneidenecken unter dem Winkel von 3 bis 5° verbessern die Werkzeug-Selbstführung speziell beim Anschnitt. Über die Verstellschrauben 25 lassen sich die Schneiden im Rundlauf zueinander und auf einen definierten Bearbeitungsdurchmesser einstellen.

Ebenfalls einen Kurzloch-Vollbohrer zeigt die Fig. 9, wobei der Bohrer jedoch in diesem Fall mit rechtwinkligen Bearbeitungsenden ausgeführt ist. Die über Mitte gehende Schneide des Schneideinsatzes 3a ist mit einer Zentrumsphase ausgestattet, welche die Werkzeugführung nach dem Anschnitt übernimmt. Gegenüber der Fig. 8 besteht bei dieser Ausführungsform der Vorteil, daß bei vielen Bearbeitungsfällen eine aufwendige Nachbearbeitung des Bohrgrundes entfallen kann.

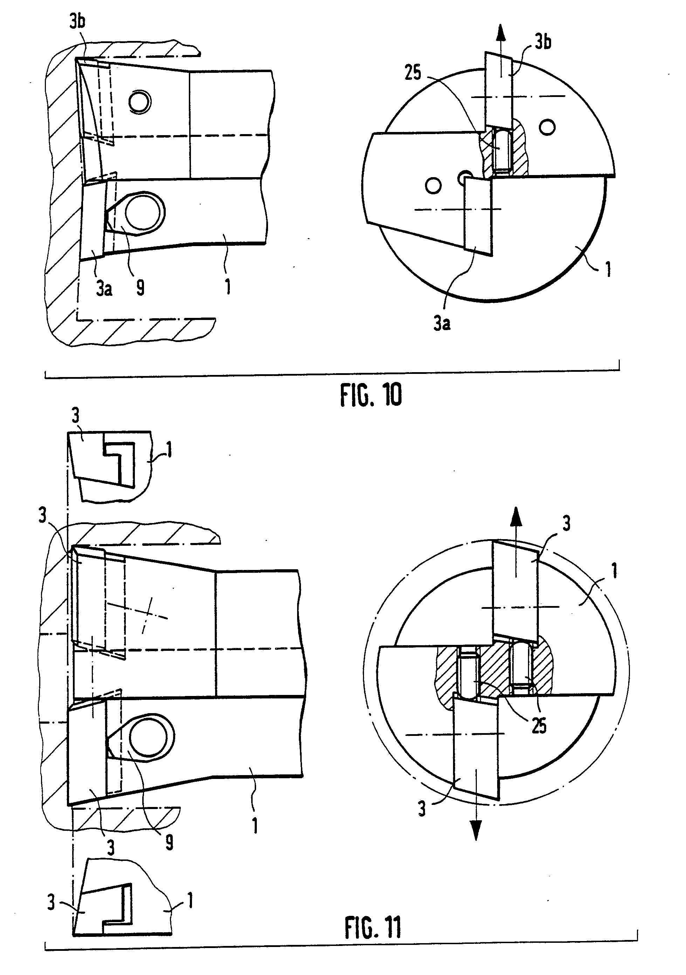

Die Fig. 10 zeigt den Aufbau eines « klassischen » Kurzloch-Vollbohrers, jedoch ist bei dieser Ausführungsform gegenüber den bekannten Werkzeugen der Bearbeitungsdurchmesser einstellbar ausgeführt, was wiederum mit Hilfe der Verstellschrauben 25 erreicht wird. Gegenüber dem Ausführungsbeispiel nach den Fig. 8 und 9 sind jedoch die Führungseigenschaften verschlechtert und die Zerspanungsleistung, bedingt durch nur eine überdeckende Schneide, geringer.

In Fig. 11 ist das bereits vorbeschriebene Schrupp-Schlichtwerkzeug mit asymmetrischer Spannutgestaltung dargestellt. Je nach Einbau der Wendeplatte 3 kann dieses Werkzeug als klassischer Senker mit z. B. zwei achsial gegenüberliegenden Hauptschneiden verwendet werden. Die radialen Abstufungen und ein definierter Schnittkreis können über die Verstellelemente 25 stufenlos eingestellt werden.

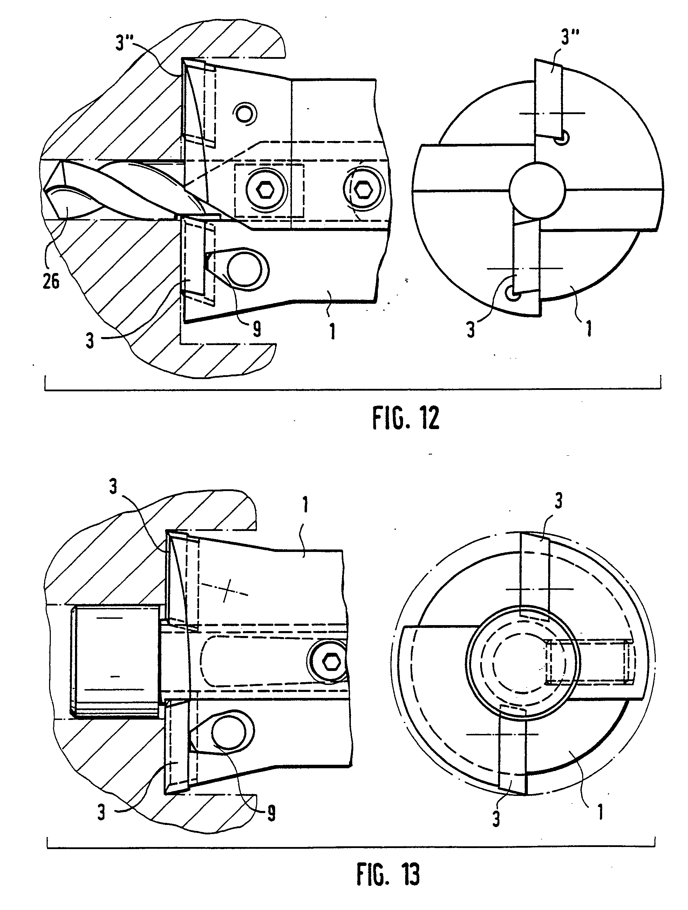

Das « rechtsschneidende » Senkwerkzeug gemäß Fig. 12 mit auswechselbarem Spiralbohrer wäre auch mit einem Zentrierbohrer denkbar. Um den Zentrumsbohrer 26 nicht zu schwächen, wird im Zentrum eine rechte Schneidplatte 3, dagegen der Bohrungsdurchmesser mit einer spiegelbildlichen (linken) Schneidplatte 3″ bestückt.

Ein Messerkopf mit axial einstellbaren Schneiden gemäß Fig. 13 wird benötigt, wenn hohe Oberflächengüten erreicht werden sollen. Bei größeren Fräsdurchmessern werden derzeitig oftmals Kurzklemmhalter in den Frässchaft eingesetzt und über einen Verstellmechanismus verstellt. Bei radialen kleinen Werkzeugen ist diese bekannte Ausführungsart aber zu großbauend. Durch die erfindungsgemäße Ausgestaltung läßt sich die benötigte kleine Bauform aber mühelos erreichen.

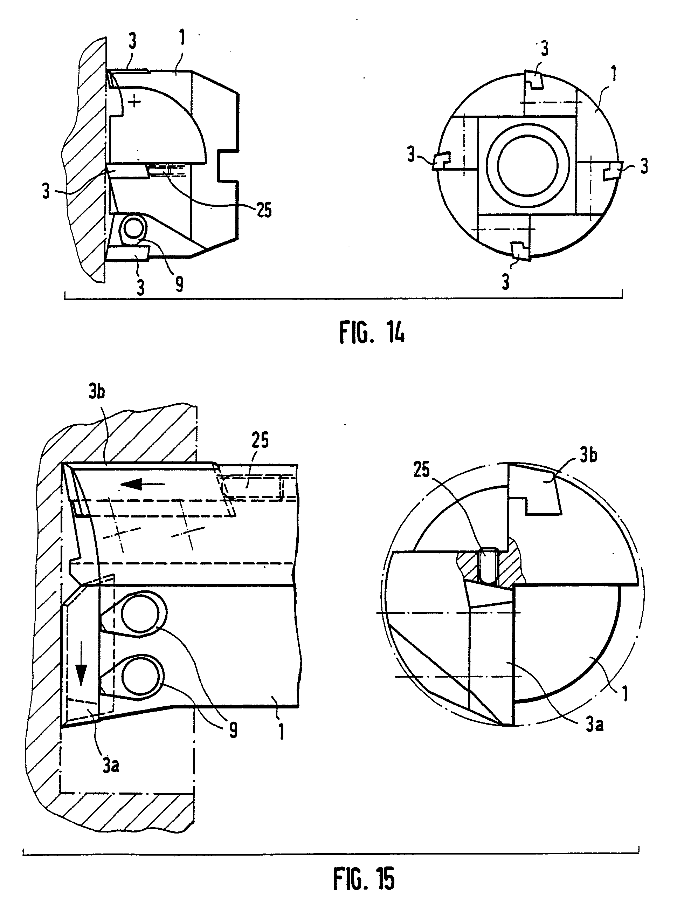

Die Fig. 14 zeigt wiederum eine Ausführungsform eines Fräsers mit erfindungsgemäß gehaltenen Schneideinsätzen, wie er beispielsweise in der Autoindustrie für Anwendungsfälle eingesetzt werden kann, bei denen ein sehr genau ausgeführter Planschlag vorhanden ist. Dies setzt voraus, daß alle Schneiden gleichzeitig und gleichmäßig stark eingreifen. Dies läßt sich durch die erfindungsgemäße Verschiebbarkeit der Schneideinsätze — wobei diese Verschiebbarkeit über eine mit kleinem Gewindegang versehene Verstellschraube nicht nur sehr einfach, sondern ohne Lösen der Klemmpratze 9 möglich ist — erreichen. Es hat sich gezeigt, daß selbst bei einer ausreichend fest angezogenen Klemmpratze die Längsverstellung der Schneideinsätze parallel zur Schneidenrichtung mit Hilfe der Verstellschrauben 25 ohne weiteres möglich ist.

Die Fig. 15 zeigt einen Keilnutenfräser für die axiale und radiale Bearbeitung. Diese ist mit einer Axialschneide mit Zentrumsfixierung versehen, die bereits im Zusammenhang mit Fig. 9 beschrieben worden ist (Schneideinsatz 3a). Entscheidend für eine gute Zerspanungsleistung ist, daß die Eckenradien der Planschneide des Schneideinsatzes 3b und der Axialschneide sich überdecken und eingestellt werden können. Hierzu sind wiederum die Verstellschrauben 25 vorgesehen.

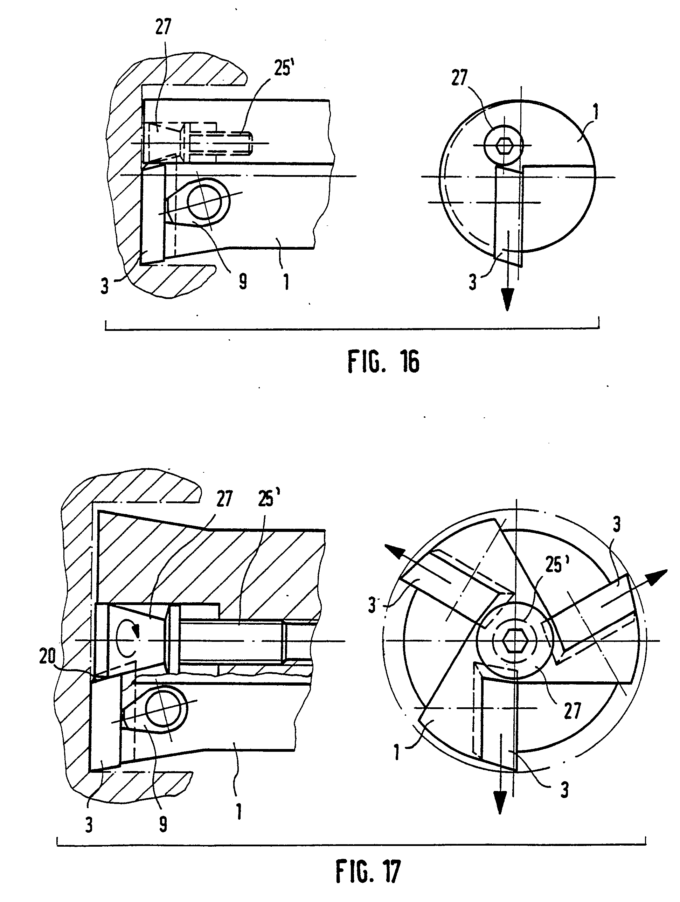

In Fig. 16 ist eine Kleinbohrstange, z. B. mit 10 mm Bearbeitungsdurchmesser, dargestellt, welche durch die radiale Verstellmöglichkeit sich zum Ausspindeln eines definierten Paßdurchmessers anbietet. Dies wird bisher oft unter Verwendung eines Ausspindelkopfes durchgeführt, in welchem die radiale Verstellung geschieht. Nachteilig außer den relativ hohen Kosten dieser bislang bekannten Lösung ist dabei, daß durch die Mittenverschiebung des Ausspindelkopfes eine relativ große Massenverschiebung stattfindet. Zwangsläufig muß daher die Schnittgeschwindigkeit reduziert werden, was höhere Fertigungskosten verursacht. Durch Verdrehen des mit einem Kegelkopf 27 versehenen Verstellelements 25' läßt sich eine einfache und wirksame Längsverstellung des Schneideinsatzes 3 erzielen.

Die Fig. 17 zeigt einen dreischneidigen Senker, bei dem alle drei Schneiden über eine zentrale Kegelschraube 25' mit Kegelkopf 27 verstellt werden. Selbstverständlich könnte auf diese Weise auch ein mehrschneidiger Senker mit noch mehr als drei Schneideinsätzen aufgebaut werden.

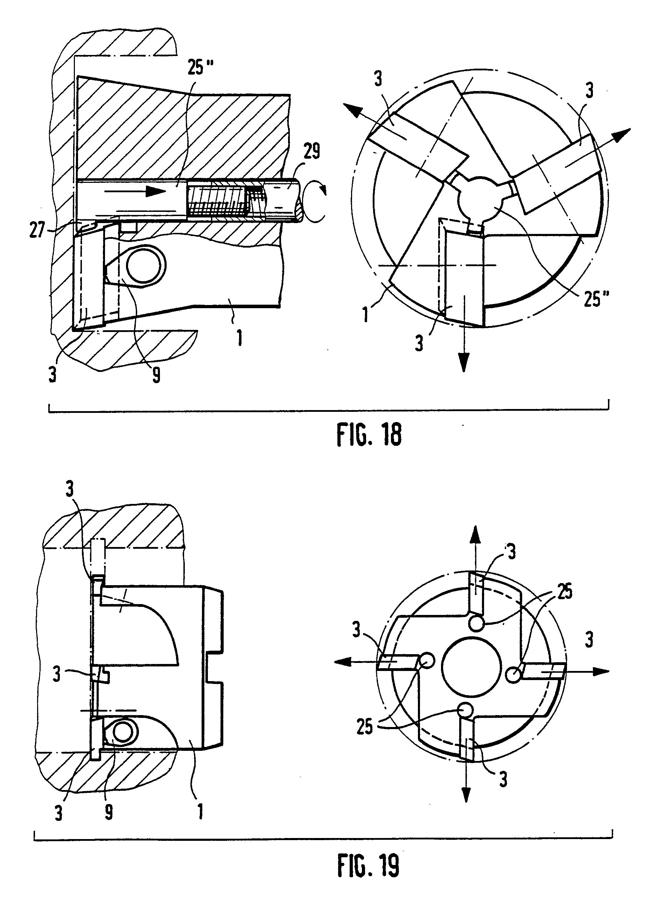

Auch die Fig. 18 zeigt einen dreischneidigen Senker, wobei jedoch in diesem Fall das Verstellelement nicht als Kegelschraube, sondern als Zuganker 25″ wiederum mit Kegelkopf 27 ausgebildet ist. Dieses Grundprinzip ermöglicht eine automatische Schneidenkompensierung, die etwa wie folgt arbeiten kann. Wird z. B. mit einem Meßgerät festgestellt, daß der Bearbeitungsdurchmesser um 0,01 mm zu klein ist, so errechnet ein Rechner über die gegebenen Parameter (Gewindesteigung und Zugankerwinkel) den radial notwendigen Zustellwinkel und steuert einen Schrittmotor an, der die Verstellgewindespindel 29 betätigt. Über den Zuganker erfolgt dann die notwendige Schneidenkorektur.

Die Fig. 19 zeigt einen Zirkular-Stechfräser, bei dem sich durch die radialen Einstellelemente 25 die Schneiden aller Schneideinsätze 3 auf den selben Schnittkreis bringen lassen. Dies führt wiederum zu einer hohen Zerspanungsleistung und zur Ausbildung eines sehr sauberen Nutgrundes. Bei der dargestellten Ausführungsform nach Fig. 19 handelt es sich um eine einseitig mit der Stechform versehene Schneidplatte, also keine Wendeplatte.

Mit besonderem Vorteil kann vorgesehen sein, daß das Einbringen des Schneideinsatzes 3 nur in Richtung des Pfeils A in Fig. 2, d. h. im wesentlichen parallel zur Längsachse des Schneidkörpers sowie seiner Schneidkante möglich ist. Daraus resultiert, daß der Abstand der Kante 30 der vorspringenden Rippe 5 des Halters vom gegenüberliegenden Boden, auf welchen der Schneideinsatz 3 aufliegt, kleiner ist als der Abstand der Kante 31 des Schneideinsatzes vom Schneideinsatzboden 32. Dies wiederum hat zur Folge, daß selbst bei gelöster Spannpratze 9 der Schneideinsatz 3 nicht nach vorne, d. h. senkrecht zur Richtung des Pfeils A in Fig. 2 herausgezogen werden kann. Darüber hinaus ist es — wie weiter oben bereits dargelegt worden ist — auch bedeutsam, daß der Druckpunkt des Verstellelements 25 vor dem Angriffspunkt der Spannpratze 9 liegt, um zu verhindern, daß bei der Betätigung des Verstellelements der Schneideinsatz 3 nach vorne herausgedrückt wird.

Alle aufgezeigten Werkzeugausführungen lassen sich im Bedarfsfall untereinander kombinieren und ergänzen. Allen gemeinsam ist dabei, daß durch die Anwendung des erfindungsgemäßen Spannprinzips sich Werkzeuge schaffen lassen, die bislang entweder überhaupt nicht oder nur sehr viel größer bauend ausgeführt werden konnten.

**Patentansprüche**

1. Schneidwerkzeug zur spanabhebenden Metallbearbeitung mit einem in eine Ausnehmung (2) eines Werkzeugschaftes (1) einsetzbaren und durch eine Klemmpratze (9) darin festgelegten Schneidkörper (3) in Form etwa eines Prismas mit zwei einander diagonal gegenüberliegenden Schneidkanten (22, 23) und benachbarte Seitenflächen bildenden Spanflächen (11, 12), die mit der jeweils gegenüberliegenden Hauptschnittdruck-Abstützfläche (Schneidkörperbodenfläche (32) einen sich zur Vorschubdruck-Abstützfläche (4) öffnenden spitzen Winkel bilden, dadurch gekennzeichnet, daß im Bereich der gemeinsamen Längskante der Spanflächen (11, 12) eine durchgehende Längs-Nut (7) in den Schneideinsatz (3) eingearbeitet ist, deren eine Seitenwand (6) als Anlagefläche für die hinterschnittene Vorschub-Druckabstützfläche (4) der Ausnehmung (2) des Werkzeugschaftes (1) dient, während die jeweils andere Seitenwand (8) die Auflagefläche für eine versenkt in eine Quernut (14) des Werkzeugschaftes (1) angeordnete Klemmpratze (9) bildet.

2. Schneidwerkzeug nach Anspruch 1, dadurch gekennzeichnet, daß die Klemmpratze (9) die Quer-Nut (14) im wesentlichen vollständig ausfüllt.

3. Schneidwerkzeug nach Anspruch 1 oder 2, dadurch gekennzeichnet, daß die Spanfläche (11, 12) des Schneidkörpers (3), die Oberfläche der Klemmpratze (9) und die Oberfläche (13) des Werkzeugschftes (1) im wesentlichen in einer Ebene liegen.

4. Schneidwerkzeug nach einem der Ansprüche 1 bis 3, dadurch gekennzeichnet, daß die Rückdruck-Abstützfläche (20) des Schneidkörpers (3) an einem Verstellelement (19) anliegt.

5. Schneidwerkzeug nach einem der Ansprüche 1 bis 4, dadurch gekennzeichnet, daß die Rückdruck-Abstützfläche (20) aller Schneidkörper (3) eines mehrschneidigen Schneidwerkzeugs an einem gemeinsamen Verstellelement (25', 25") anliegen.

6. Schneidwerkzeug nach einem der Ansprüche 1 bis 5, dadurch gekennzeichnet, daß das Verstellelement eine Kegelschraube ist, deren kegelförmige Kopffläche linienförmig an der dazu parallelen Rückdruck-Abstützfläche (20) des Schneidkörpers (3) anliegt.

7. Schneidwerkzeug nach einem der Ansprüche 1 bis 5, dadurch gekennzeichnet, daß das Verstellelement (25) ein Zuganker ist.

8. Schneidwerkzeug nach Anspruch 7, dadurch gekennzeichnet, daß die Verstellgewindespindel (29) des Zugankers (25") über einen rechnergesteuerten Schrittmotor betätigt wird.

9. Schneidwerkzeug nach einem der Ansprüche 1 bis 8, dadurch gekennzeichnet, daß die Ausbildung der Rippe in Bezug auf die Abmessungen des Schneideinsatzes (3) so getroffen ist, daß sich der Schneideinsatz (3) nur parallel zur Schneidkante in den Plattensitz einführen läßt.

10. Schneidwerkzeug nach Anspruch 9, dadurch gekennzeichnet, daß der Abstand der Auflagekante (30) der Rippe (5) vom Boden (33) der Ausnehmung (2) zur Aufnahme des Schneideinsatzes (3) kleiner ist als der Abstand der Kante (31) der Seitenfläche (8) der Längsnut (7) des Schneidkörpers (3) von der jeweils zugehörenden Schneidkörperbodenfläche (32).

**Claims**

1. A cutting tool for metal cutting having a cutting member (3) which can be inserted in a recess (2) in a tool shank (1) and fixed therein by a clamping claw (9) and which is substantially in the form of a prism with two cutting edges (22, 23) situated diagonally opposite one another and adjacent faces (11, 12) forming side faces which, with the particular opposite supporting face for the main tool thrust (bottom face (32) of the cutting member), form an acute angle opening towards the supporting face (4) for the feed pressure, characterised in that in the region of the common longitudinal edge of the faces (11, 12), a continuous longitudinal groove (7) is formed in the tool bit (3), one side wall (6) of which groove serves as a contact surface for the undercut supporting face (4) for the feed pressure of the recess (2) of the tool shank (1), while the other side wall (8) forms the contact surface for a clamping claw (9) disposed countersunk in a transverse groove (14) in the tool shank (1).

2. A cutting tool according to Claim 1, characterised in that the clamping claw (9) fills in the transverse groove (14) substantially completely.

3. A cutting tool according to Claim 1 or 2, characterised in that the face (11, 12) of the cutting member (3), the surface of the clamping claw (9) and the surface (13) of the tool shank (1) lie substantially in one plane.

4. A cutting tool according to any one of the Claims 1 to 3, characterised in that the reverse-thrust supporting face (20) of the cutting member (3) bears against an adjusting element (19).

5. A cutting tool according to any one of the Claims 1 to 4, characterised in that the reverse-thrust supporting faces (20) of all the cutting members (3) of a multi-cut cutting tool bear against a common adjusting element (25', 25").

6. A cutting tool according to any one of the Claims 1 to 5, characterised in that the adjusting element is a cone screw, the conical head face of which bears linearly against the reverse-pressure supporting surface (20) of the cutting member (3), wich surface is parallel thereto.

7. A cutting tool according to any one of the Claims 1 to 5, characterised in that the adjusting element (25") is a tension rod.

8. A cutting tool according to Claim 7, characterised in that the threaded adjusting spindle (29) of the tension rod (25") is actuated via a computer-controlled stepping motor.

9. A cutting tool according to any one of the Claims 1 to 8, characterised in that the construction of the rib in relation to the dimensions of the tool bit is such that the tool bit (3) can only be introduced into the tip seating parallel to the cutting edge.

10. A cutting tool according to Claim 9, characterised in that the distance of the bearing edge (30) of the rib (5) from the bottom (33) of the recess (2) to receive the tool bit (3) is shorter than the distance of the edge (31) of the side face (8) of the longitudinal groove (7) of the cutting member (3) from the particular associatied bottom face (32) of the cutting member.

**Revendications**

1. Outil de coupe pour l'usinage de métal avec enlèvement de copeaux, comportant un corps de coupe (3) pouvant être inséré dans un évidement (2) d'une tige (1) de l'outil et fixé dans cet évidement par une griffe de serrage (9) et possédant approximativement la forme d'un prisme comportant deux arêtes de coupe (22, 23) opposées l'une à l'autre en diagonale et des faces de coupe (11, 12) formant des surfaces latérales voisines et faisant avec la surface respectivement opposée supportant la pression de coupe principale (surface de base du corps de coupe (32), un angle aigu s'ouvrant en direction de la surface (4) d'application de la pression d'avance, caractérisé en ce que dans la zone de l'arête longitudinale commune des faces de coupe (11, 12) se trouve ménagée par usinage, et ce dans l'élément rapporté de coupe (3), une rainure longitudinale continue (7), dont une paroi latérale (6) est utilisée comme surface d'appui pour la surface en dépouille (4) d'application de la pression d'avance, que comporte l'évidement (2) de la tige (1) de l'outil, tandis que l'autre paroi latérale respective (8) forme la surface d'application pour une griffe de serrage (9) disposée en renfoncement dans une rainure transversale (14) de la tige (1) de l'outil.

2. Outil de coupe selon la revendication 1, caractérisé en ce que la griffe de serrage (9) remplit sensiblement complètement la rainure transversale (14).

3. Outil de coupe selon la revendication 1 ou 2, caractérisé en ce que la face de coupe (11, 12) du corps de coupe (3), la face supérieure de la griffe de serrage (9) et la plaque supérieure (13) de la tige (1) de l'outil sont situées sensiblement dans un plan.

4. Outil de coupe selon l'une des revendications 1 à 3, caractérisé en ce que la surface (20) d'application de la contre-pression, que comporte le corps de coupe (3), s'applique contre un organe de réglage (19).

5. Outil de coupe selon l'une des revendications 1 à 4, caractérisé en ce que la surface (20) d'application de la contre-pression, que comportent tous les corps de coupe (3) d'un outil de coupe à plusieurs tranchants, s'appliquent contre un organe de réglage commun (25', 25").

6. Outil de coupe selon l'une des revendications 1 à 5, caractérisé en ce que l'organe de réglage est une vis conique, dont la surface conique de la tête s'applique linéairement contre la surface (20) d'application de la contre-pression, que comporte le corps de coupe (3) et qui est parallèle à cette surface de tête de la vis.

7. Outil de coupe selon l'une des revendications 1 à 5, caractérisé en ce que l'organe de réglage (25") est un tirant d'ancrage.

8. Outil de coupe selon la revendication 7, caractérisé en ce que la broche filetée de réglage (29) du tirant d'ancrage (25") est actionnée par l'intermédiaire d'un moteur pas-à-pas commandé par ordinateur.

9. Outil de coupe selon l'une des revendications 1 à 8, caractérisé en ce que l'aménagement de la nervure est réalisé en liaison avec les dimensions de l'élément rapporté de coupe (3) de sorte que cet élément rapporté de coupe (3) peut être introduit uniquement parallèlement à l'arête de coupe dans le siège de la plaque.

10. Outil de coupe selon la revendication 9, caractérisé en ce que la distance entre l'arête d'appui (30) de la nervure (5) et le fond (33) de l'évidement (2) servant à loger l'élément rapporté de coupe (3) est inférieure à la distance entre l'arête (31) de la surface latérale (8) de la rainure longitudinale (7) du corps de coupe (3) et la surface respectivement associée (32) de base du corps de coupe.

0 146 030

FIG. 1

FIG. 2

FIG. 3

FIG. 4

FIG. 5

FIG. 6

FIG. 7

FIG. 8

FIG. 9

**FIG. 10**

**FIG. 11**

4

FIG. 12

FIG. 13

5

FIG. 14

FIG. 15

FIG. 16

FIG. 17

FIG. 18

FIG. 19